Europäisches Patentamt

European Patent Office

Office européen des brevets

(19)

(11) Publication number: **0 191 739**
A2

(12)

# EUROPEAN PATENT APPLICATION

(21) Application number: **86830033.6**

(22) Date of filing: **13.02.86**

(51) Int. Cl.⁴: **B 23 B 1/00**

(30) Priority: **14.02.85  IT 1952085**

(43) Date of publication of application: **20.08.86**
**Bulletin 86/34**

(84) Designated Contracting States: **AT BE CH DE FR GB LI LU NL SE**

(71) Applicant: **INNSE INNOCENTI SANTEUSTACCHIO S.p.A., 20, Via A. Franchi, I-25127 Brescia (IT)**

(72) Inventor: **Guzzoni, Giorgio, Via Schivardi, 92, I-25123 Brescia (IT)**

(74) Representative: **De Nova, Roberto et al, c/o Jacobacci-Casetta & Perani S.p.A. Via Visconti di Modrone 7, I-20122 Milano (IT)**

(54) **A method of forming, from a rough forging, an end-machined and drilled blank for extrusion on a pipe extruding press, and a machine tool for implementing the method.**

(57) A method of forming, from a rough forging, an end-machined and drilled blank for extrusion on a pipe extruding press comprises the steps of drilling the rough forging axially on a lathe by means of a straight-flute drill bit from one end, and of end-machining it concurrently with the drilling step successively at the other end and said one end.

EP 0 191 739 A2

A METHOD OF FORMING, FROM A ROUGH FORGING, AN END-
MACHINED AND DRILLED BLANK FOR EXTRUSION ON A PIPE
EXTRUDING PRESS, AND A MACHINE TOOL FOR IMPLEMENTING
THE METHOD

This invention relates to a method of forming, from a rough forging, an end-machined and drilled blank for extrusion on a pipe extruding press.

In manufacturing pipes on an extruding press, suitably prepared blanks are required for acceptance by the press. Such blanks should be substantially cylindrical in shape, drilled axially throughout their length, and provided with at least one suitably machined end. As an example, such a blank may be 1,200 mm long and have an outside diameter of 600 mm and an axial bore with a diameter dimension of about 200 mm. As for the machining of one end, this broadly includes facing, forming an outside bevel, and forming a lead-in entrance to the axial bore. Optional end-machining of the other end would include an outside bevel.

To form such blanks, each to yield a respective pipe piece on leaving said extruding press, it is common practice to start with substantially cylindrical roughings, such as forged billets. Such a forging is first set on a deep drilling machine for drilling it axially; therefater, it would be put on a lathe for end-machining, in one or two passes depending on whether one or both of its ends require machining.

Alternatively, end-machining is sometimes carried out with the workpiece held stationary, e.g. on a boring machine equipped with a tool adapted to traverse the table radially. Once again, the forging must be set twice on the boring machine if both ends require to be machined.

While providing blanks which are fairly satisfactory for several respects, such procedures leave something to be desired from the standpoint of productivity.

To increase productivity, a so-called transfer-type machine tool has been suggested, wherein the end-machining operation is carried out by taking a roughing successively through three work stations equipped with respective machining units for end-machining it at one end. An optional fourth station having a respective machining unit may be activated to end-machine the other end of the roughing, where required.

In that way, productivity has been improved, but at the expense of much higher investment costs, as is typical with transfer machines.

The problem underlying this invention is to provide a method as indicated, which can overcome the above-mentioned prior drawbacks.

The problem is solved by a method as indicated, which is characterised in that it comprises the steps of drilling a rough forging through on a lathe using a straight-flute drill bit from a first end, and of end-machining it on the lathe itself while drilling at the second end thereof.

Advantageously, said method further comprises a step of end-machining the first end while drilling.

Advantageously, the end-machining steps on the first and second ends are carried out in succession by means of tools mounted on a tool-holder car.

Further features and advantages of the method according to this invention will become apparent from the following description of an exemplary embodiment thereof, given by way of illustration and not of limitation with reference to a machine tool shown in the accompanying drawings, where:

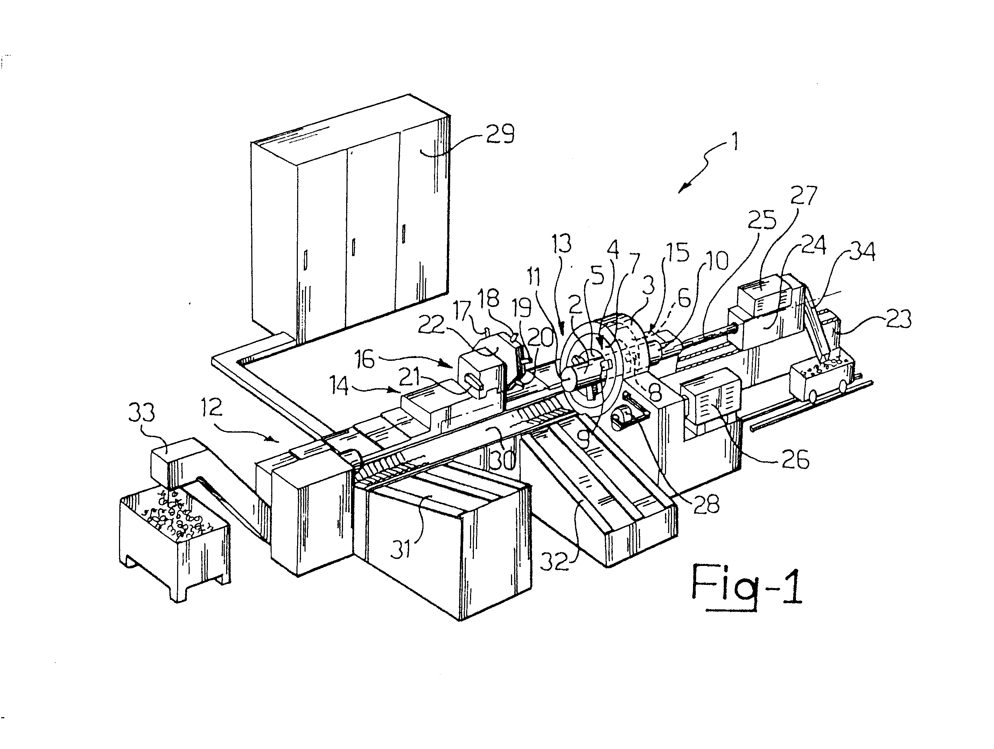

Figure 1 is a perspective view of a machine tool according to the invention, and

Figures 2 to 6 are diagramatic views showing a detail of the machine tool of Figure 1, at successive steps of its operation.

With reference to the drawing figures, generally indicated at 1 is a machine tool. The machine tool 1 is a lathe intended for forming, from a rough forging 2 an end-machined and drilled blank for extrusion on a pipe extruding press.

The lathe 1 comprises a head 3. Carried rotatively on the head 3 is a chuck 4, which is formed with a bar passageway 5 coaxial therewith, sized to receive the forging 2 in coaxial relationship.

The chuck 4 is provided, respectively at its opposed rear 6 and forward 7 ends, with rear 8 and forward 9 jaws. The jaws 8 and 9 are intended to act on the forging 2 to hold it in the chuck 4. It should be noted that the forging 2, as held in the chuck 4, will have its opposed ends jutting out of the chuck and the head. Said opposed ends are indicated in the figure at 10 and 11, respectively for the first or rear end and for the second or forward end.

The lathe 1 also comprises a longitudinal bed 12, which extends parallel to the chuck 4 and laterally of the head 3. In particular, the bed 12 has a middle section 13, flanking the head 3, a forward section 14 extending forwardly of the head, and a rear section 15 extending rearwardly of the head.

A tool-holder car, comprehensively designated 16, is mounted on the bed 12 for a guided sliding movement and is equipped with plural tools 17, 18, 19, 20, 21, which will be presently described.

In particular, the tools 17, 18, 18 and 20 are respectively a chamfering tool of the copying type, a drill bit, and an inside turning tool. Such tools are mounted on a revolving turret 22 associated with the car 16.

The tool 21 is a chamfering tool of the copying type, which is secured directly to the car itself.

The lathe 1 also comprises a small longitudinal bed 23, which extends parallel to the chuck 4 and rearwardly of the head 3. Mounted slidingly in a guided fashion on the small bed 23 is a slide 24, which is equipped with a straight-flute drill bit, such as a deep drill bit of the so-called BTA type with a water circulation system 25 which extends coaxially with the chuck 4.

To drive the chuck 4 rotatively, at a set angular velocity, there is provided a motor means 26 mounted on the head 4. To drive the straight-flute drill bit 25 rotatively at a set angular velocity oppositely to the chuck angular velocity, there is provided a motor means 27, carried on the slide 24.

In order to bring the tool-holder car 16 into operative engagement with the workpiece 2, forwardly and rearwardly of the chuck, there are provided traversing mechanisms known per se and not shown. To bring the slide 24 and the straight-flute drill bit 25 to operatively engage, coaxially with the chuck and toward it, the workpiece, conventional traversing means are provided, no further illustrated.

The lathe 1 is provided with a bell 28, mounted on the head 4 for a tilting movement and driven by a motor means such that it can be brought into tight contact with the forward end 11 of the forging 2.

Indicated at 29 is a cabinet for an electrical apparatus, advantageously of the NC variety, for automatically controlling the aforesaid motor means and traverse mechanisms.

The numeral 29 designates a runway for loading a forging to be machined and discharging the blank, which extends forwardly of the chuck 4; to said runway being taken, through a crosswise extending chute 30, forgings to be machined, and the blanks being taken away from said runway through a crosswise-laid chute 31.

The lathe 1 is also provided with devices 32 and 33 for chip removal, respectively from the tools on the car 16 and the straight-flute drill bit 25.

A method according to the invention, as implemnted on the lathe just described, will be now discussed herein below.

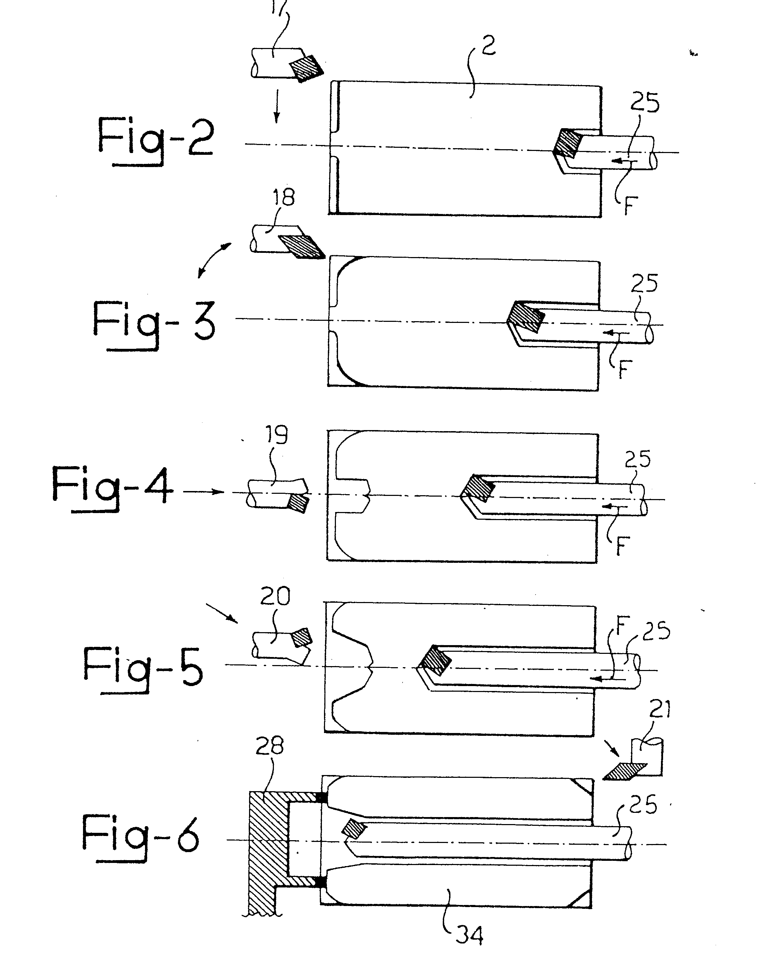

In connection with one step of the method, a forging 2 is driven rotatively and drilled axially through from its first, or rear, end 10 by means of the straight-flute drill bit 25, which is, in turn, driven rotatively and to traverse in the direction of the arrow F (see Figures 2 to 6).

During this drilling step, an end-machining step is carried out on the forging 2, at the forward end 11 thereof, by means of the tool-holder car 16, which locates at the section 14 of the bed 12. This end-machining step includes a number of operations, usually end-machining operations of various types and in different successions, being carried out at said rear end 10 to end-machine it as required.

As an example, on said end 11 of the forging 2, there is first performed a facing with the tool 17 (see Figure 2), followed by a radiused bevel with the tool 18 (see Figure 3), a leader hole with the tool 19 (see Figure 4), and a conical lead-in entrance with the tool 20 (see Figure 5).

On completion of such end-machining operations, the bell 28 is moved into tight engagement with the end 10 of the workpiece, to hold back the circulation water for the straight-flute drill bit as it flows into the conical entrance (see Figure 6).

It should be noted that on completion of the end-machining step on the end 11, the slide 16 moves from the section 14 through the section 13 to the section 15 of the bed 12, to an operative position rearwardly of the chuck 4. Then, during the aforesaid drilling step and successively to the second end end-machining step, a step is carried out to end-machine the forging 2 at its rear end 10. In the example considered, a 45° bevel is made on the end 10 with the tool 21 (see Figure 6).

Thus the sought end-machined and drilled blank indicated at 35 in Figure 6 is obtained.

With the inventive method, the blank is completed within an unusually short time.

Furthermore, completely eliminated is the downtime involved heretofore by the several settings provided for in the prior art.

A not negligible advantage of this method is that the drilled bore and end-machining are performed in a strictly concentrical fashion.

Lastly, it should be noted that an important advantage of an economical character is brought about by the simple construction of the lathe employed to implement the method of this invention.

Of course, the method and the lathe disclosed hereinabove may be variously modified and altered

- 8 -

by a skilled one to meet individual contingent requirements without departing from the true scope of the invention, as defined in the appended claims.

## CLAIMS

1. A method of forming, from a rough forging, an end-machined and drilled blank for extrusion on a pipe extruding press, characterised in that it comprises the steps of drilling a rough forging axially through on a lathe using a straight-flute drill bit from a first end thereof, and of carrying out end-machining operations on the other end on said lathe during the drilling step.

2. A method according to Claim 1, characterised in that it comprises a step including end-machining operations on the first end while drilling.

3. A method according to Claim 2, characterised in that the end-machining steps on the second end and first ends are carried out in succession by means of tools mounted on a tool-holder car.

4. A lathe for implementing the method of Claims 1 to 3, characterised in that it comprises a chuck (4) provided with a bar passageway (5) coaxial therewith, carried rotatably on a head (3) and being equipped with jaws (9,8) at the opposed forward and rearward ends (7,6) thereof, a tool-holder car (16) movable along a bed (12) extending laterally of the head (3) and at least forwardly thereof, and operative at least forwardly of the chuck (4), and a slide (24) movable along a small bed (23) extending rearwardly of the head (3) and parallel to the chuck (4), and being equipped with a straight-flute drill bit (25) lying coaxially with the chuck (4) and arranged to operate from the chuck rear end coaxially therewith.

0191739

Fig-1

0191739

Fig-2

Fig-3

Fig-4 →

Fig-5

Fig-6